Europäisches Patentamt

European Patent Office

Office européen des brevets

(11) Veröffentlichungsnummer: **0 279 184
B1**

(12) **EUROPÄISCHE PATENTSCHRIFT**

(45) Veröffentlichungstag der Patentschrift:
14.11.90

(21) Anmeldenummer: 88100616.7

(22) Anmeldetag: 18.01.88

(51) Int. Cl.⁵: **G01H 1/00**, G01S 5/18

(54) Verfahren zur Ortung von Anschlägen mit einem Körperschall-Überwachungssystem, insbesondere bei druckführenden Umschliessungen in Kraftwerken.

(30) Priorität: 31.01.87 DE 3702879

(43) Veröffentlichungstag der Anmeldung:
24.08.88 Patentblatt 88/34

(45) Bekanntmachung des Hinweises auf die Patenterteilung:
14.11.90 Patentblatt 90/46

(84) Benannte Vertragsstaaten:
BE CH DE ES FR LI SE

(56) Entgegenhaltungen:
EP-A- 0 056 553
GB-A- 2 114 744

TECHNISCHES MESSEN, Band 47, Nr. 12, 1980,
Seiten 427-434, München, DE; J. KOLERUS:
"Schallemissionsanalyse. Teil 2. Verfahren und Geräte"
TECHNICAL REVIEW, Nr. 2, 1981, Seiten 3-42, Närum,
DK; H.J. RINDORF: "Acoustics emission source
location in theory and in practice"

(73) Patentinhaber: Siemens Aktiengesellschaft,
Wittelsbacherplatz 2, D-8000 München 2(DE)

(72) Erfinder: Krien, Konrad, Dr., Anderlohrstrasse 11,
D-8520 Erlangen(DE)

## Beschreibung

Die Erfindung bezieht sich auf ein Verfahren zur Ortung von Anschlägen ("Bursts") mit einem Körperschall-Überwachungssystem bei druckführenden Umschließungen in Kraftwerken, wie Komponenten und Rohrleitungen, gemäß Oberbegriff des Anspruchs 1. Das Verfahren hat eine besondere Bedeutung für Kernkraftwerke, z.B. solche mit Druckwasserreaktoren (DWR) oder solche mit Siedewasserreaktoren (SWR). Dabei spielt die Gewährleistung der Integrität der druckführenden Komponenten und Rohrleitungen eine besondere Rolle. Zu den Komponenten zählen außer dem Reaktordruckbehälter die Dampferzeuger, Hauptkühlmittelpumpen, Druckhalter, um nur die wichtigsten zu nennen.

Wenn also in Kraftwerken allgemein oder Kernkraftwerken im besonderen lose oder lockere Teile durch anomale Körperschallsignale (Bursts) gemeldet werden, so ist die Ortung der Anschläge eines der wichtigsten Hilfsmittel zur Beurteilung der Ursachen.

Zwar ist ein gattungsgemäßes Verfahren bekanntgeworden, siehe z.B. VDI Berichte Nr. 568 (1985), Seiten 13 bis 18, wo B. Olma und al über "Schwingungs- und Körperschallüberwachung an Primärkreiskomponenten von Kernkraftwerken" berichten, jedoch ist mit diesem bekannten Verfahren eine genaue Ortung nicht immer zuverlässig möglich, denn
- es ist selten klar, ob gemessene Referenzschallgeschwindigkeiten für die aktuellen Signale zutreffen;
- oft ist nur der Ort der Schalleinleitung in die druckführende Umschließung bestimmbar, nicht jedoch der tatsächliche Schlagort;
- manchmal reicht die Anzahl der installierten Signalaufnehmer nicht aus, den Schalleinleitungsort annähernd festzulegen.

Man benutzt bei dem bekannten Verfahren magnetische adaptierte Körperschallaufnehmer, welche zwei Resonanzfrequenzen haben, z.B. eine aufnehmerspezifische bei ca. 20 bis 30 kHz und eine halterungsspezifische im Bereich 5 bis 10 kHz, zur Separation von zwei Burstsignalkomponenten, wobei zugehörige Fortpflanzungsgeschwindigkeiten postuliert bzw. vermutet werden.

Der Erfindung liegt die Aufgabe zugrunde, das Verfahren der eingangs definierten Art so zu verfeinern und weiter auszubilden,
- daß genauere Ortungen des Burstortes mittels Selbstcheck ermöglicht sind, d.h. das neue Verfahren soll redundant arbeiten;
- daß die Anzahl der erforderlichen Körperschall-Sensoren bzw. Aufnehmer bei gegebener Meßaufgabe im allgemeinen reduzierbar ist, ohne daß Einbußen an Zuverlässigkeit bzw. Reproduzierbarkeit der Ergebnisse in Kauf genommen werden müßten; und
- daß nicht nur die Schalleinleitungsorte, sondern auch die Schlag- bzw. Burstorte ermittelt werden können.

Erfindungsgemäß wird die gestellte Aufgabe mit einem gattungsgemäßen Verfahren durch die im Kennzeichen des Anspruchs 1 angegebenen Merkmale gelöst. Eine vorteilhafte Ausgestaltung dieses Verfahrens ist im Anspruch 2 angegeben.

Der Erfindung liegt die Erkenntnis zugrunde, daß erstens Bursts in sich selbst die Information tragen, mit welcher Geschwindigkeit die Signal-Komponenten zum Aufnehmer gelangt sind, und daß es zweitens im Burst mindestens zwei separierbare Burstsignalkomponenten gibt, deren Schallgeschwindigkeiten voneinander verschieden und infolge der vorgenannten ersten Bedingung sogar bekannt sind. Bei einer genaueren Berücksichtigung der Theorie der Plattenwellen hat sich herausgestellt, daß bei Körperschallsignalen bzw. sogenannten Bursts beide vorgenannten Bedingungen erfüllt sind. Bei bisherigen Ortungen wurde nie der volle Informationsgehalt der Bursts ausgenutzt.

Hinsichtlich der Vorteilsaufzählung im besonderen wird auf das Schlußkapitel "4. Ergebnisse, Konsequenzen und Vorteile" verwiesen.

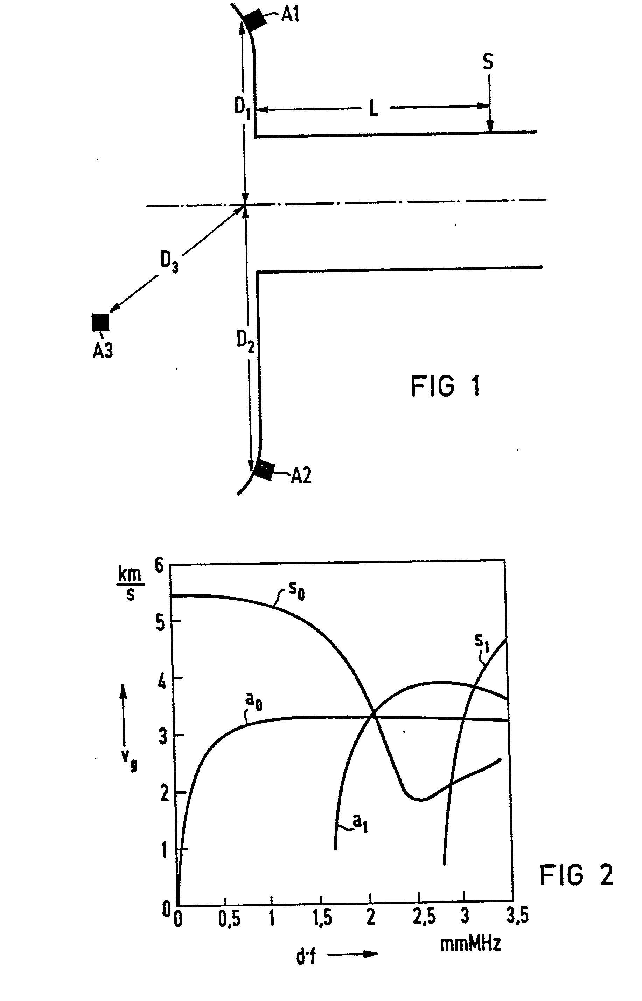

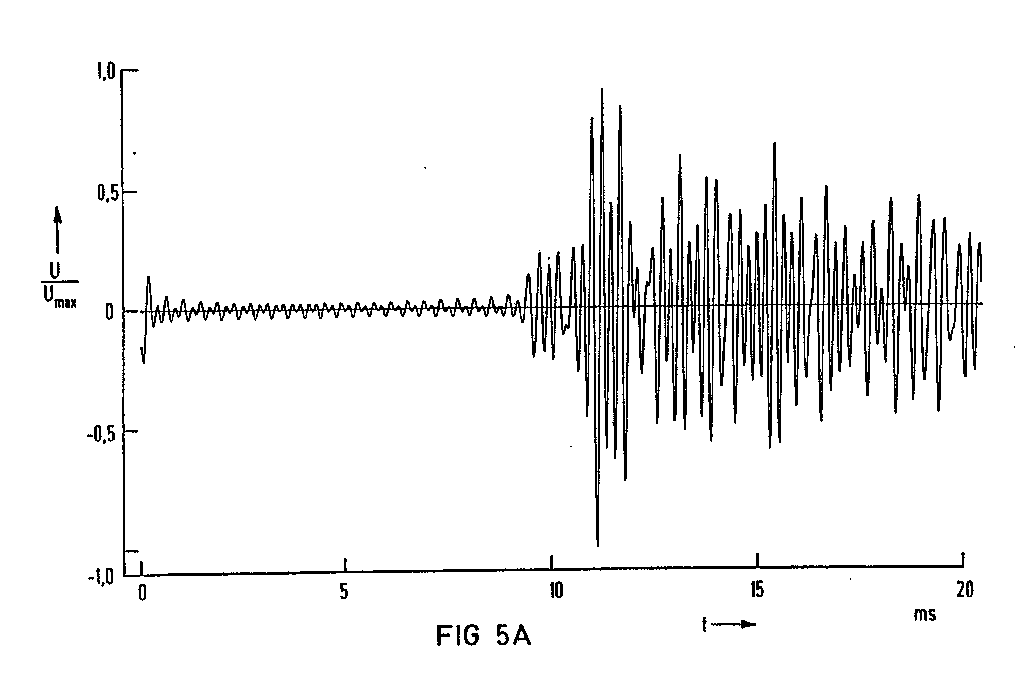

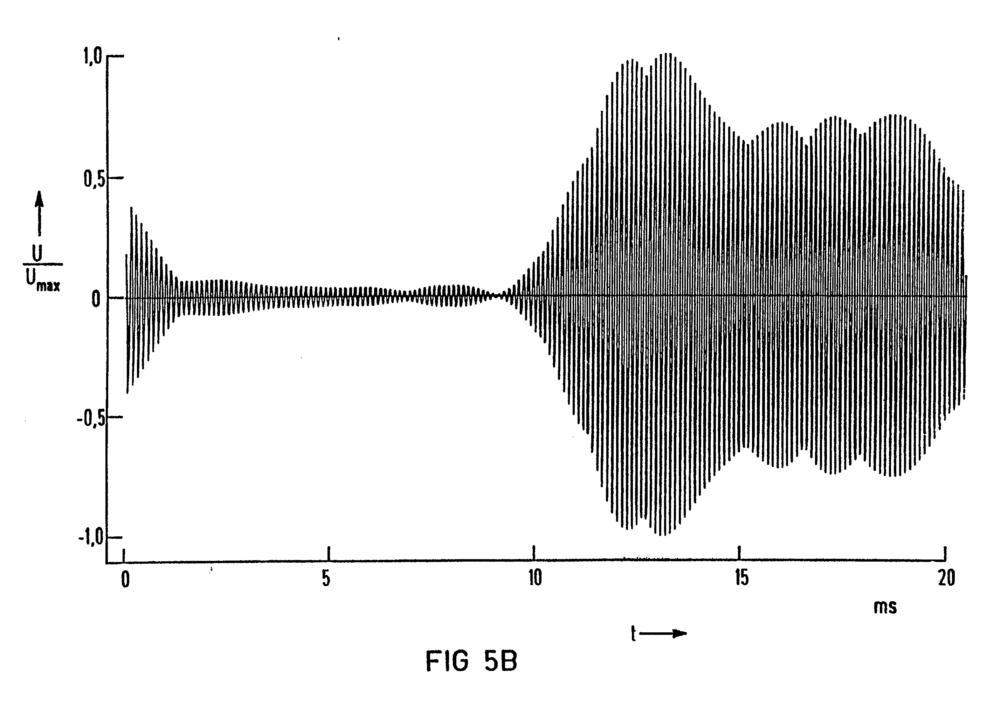

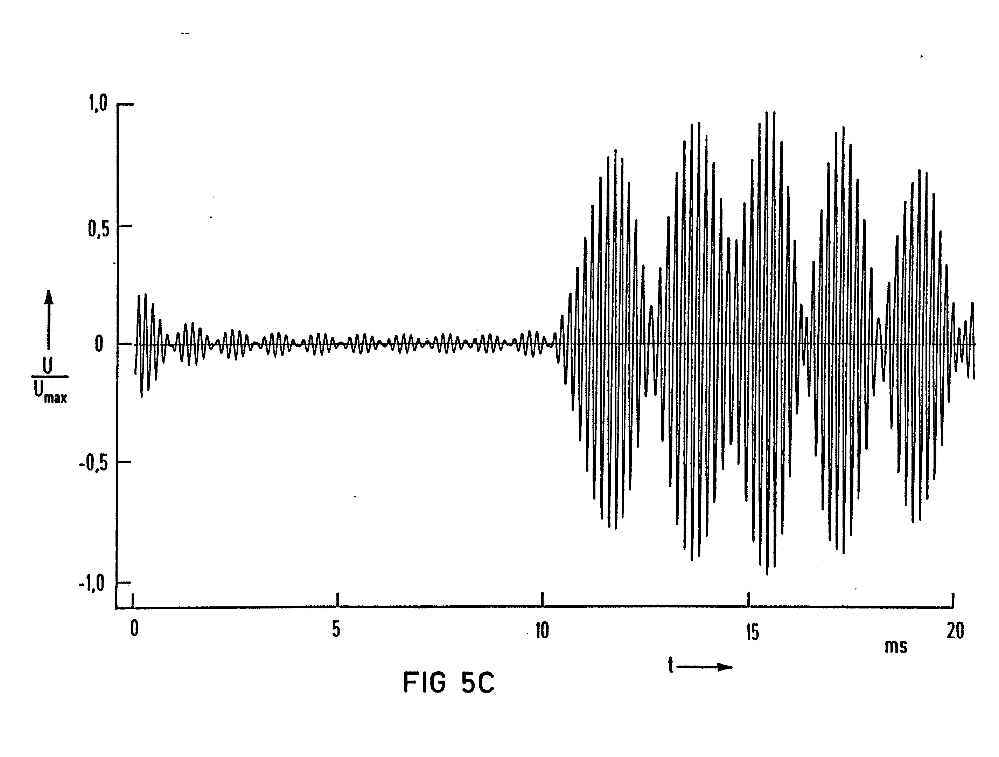

Wegen der Komplexität des Verfahrens nach der Erfindung wird dieses im folgenden zunächst prinzipiell anhand der FIG 1 bis FIG 4 der Zeichnung und daran anschließend im Detail zweier Ausführungsbeispiele anhand der FIG 5 A, B, C bis 7 der Zeichnung erläutert. Dabei ist die Beschreibung der besseren Übersichtlichkeit wegen in die Kapitel 1 bis 4 und entsprechende Unterkapitel untergliedert.

In der Zeichnung zeigen:

FIG 1 im Ausschnitt schematisch eine druckumschließende Komponente, z.B. einen Dampferzeuger für Druckwasserkernkraftwerke, mit einer an diese angeschlossenen Rohrleitung, wobei an ersterer drei Körperschall-Sensoren als Aufnehmer angebracht sind.

FIG 2 ein bekanntes Modendiagramm, in welchem der dispersionsbedingte Verlauf der Gruppengeschwindigkeit $v_g$ (Ordinate) einzelner Schallmoden $a_0$, $s_0$, $a_1$, $s_1$ als Funktion des Produktes Plattendicke $\times$ Frequenz = d . f (Abszisse) dargestellt ist.

FIG 3 die schematische Darstellung des Verlaufs der Zeitdifferenzen $t_i - t_n$ (in willkürlichen Einheiten auf der Ordinate aufgetragen) für Burstsignalkomponenten in Abhängigkeit von dem Produkt d . f (Abszisse) unter Berücksichtigung der Dispersion der Schallwellen, wobei Referenz oder Bezugsnormal $t_i - t_n = 0$ für die Zeitdifferenz ein Punkt auf der $a_0$-Dispersionskurve ist.

FIG 4 ein der Fig 3 entsprechendes Diagramm, wobei jedoch Referenz oder Bezugsnormal für die Zeitdifferenz $t_i - t_n = 0$ ein Punkt auf der $s_0$-Dispersionskurve ist.

FIG 5A, 5B, 5C drei verschiedene Komponenten eines einzigen Burstsignals, die bei einem Testschlag auf eine heiße Loop-Leitung eines Druckwasser-Reaktors nach digitaler Bandpaßfilterung, und zwar mit den drei Bandpaß-Grenzfrequenzen 2,5 kHz bis 5,0 kHz (FIG 5A), 8,25 kHz bis 8,75 kHz (FIG 5B) und 5,25 kHz bis 6,26 kHz (FIG 5C) und mit zugehörigen gemessenen Laufzeiten von 9,2 ms (FIG 5A), 9,2 ms (FIG 5B) und 10,0 ms (FIG 5C) aufgezeichnet wurden.

Fig. 6 ein Zeitdifferenz/Frequenz-Diagramm, in welchem die von der Frequenz f in kHz (Abszissenachse) abhängigen Zeitdifferenzen $t_i - t_n$ ( in ms auf der Ordinatenachse) von drei Burstsignal-Komponenten dargestellt sind, welch letztere bei einem Testschlagburst auf eine Druckwasserreaktor-Loopleitung entstehen, wobei $f_n$ die Referenz-Frequenz bedeutet und die gestrichelte Kurve die theoretische Dispersion des $a_0$-Modes darstellt, welche zur Schallmoden-Identifikation dient, und schließlich

FIG 7 ein FIG 6 entsprechendes Diagramm, basierend auf vier aufgenommenen Burstsignalkomponenten, wobei der Testschlag an dem Druckbehälter eines Siedewasserreaktors ausgeführt wurde.

Die im folgenden angegebenen Formeln werden zur Erleichterung der Bezugnahme mit laufenden Nummern gekennzeichnet.

### 1. Erklärungen zur Ortungsproblematik aufgrund von Laufzeitdifferenzen

Im folgenden sind einige starke Vereinfachungen vorgenommen. Dazu gehören die Vernachlässigung von Schallmodenwandlungen, besonders an den Übergängen von Rohrleitungen zu Kesselwandungen und die Annahme, daß auch auf Rohrleitungen die Aussagen der Plattenwellen wenigstens annäherungsweise gelten.

Obwohl dies bei kleinen Rohrleitungsdurchmessern und damit besonders bei kleinen Schallsignalfrequenzen doch zu Ungenauigkeiten bei der Ortung der Schallquellen führen dürfte, erlaubt die skizzierte Methode doch wenigstens eine ungefähre Bestimmung der Schallgeschwindigkeit aus den Signalen selbst und damit eine wesentliche Verbesserung der Situation gegenüber der, bei der nicht einmal eine Unterscheidung der Geschwindigkeiten von ca. 5,2 $kms^{-1}$ und 3,0 $kms^{-1}$, d.h. fast ein Faktor 2, möglich war. Mit dieser Einschränkung seien die grundsätzlichen Probleme anhand der schematischen Skizze einer Rohrleitung und eines Teils einer Kesselwand (z.B. Reaktordruckbehälter oder Dampferzeuger) aus FIG 1 erläutert. L gibt die Länge des Rohrleitungsstücks vom Schlagort S zur Kesselwandung an. $D_i$ (i = 1, 2, 3) sind die kürzesten Weglängen vom Rohrleitungsstutzen zu drei Aufnehmern in Form von Körperschallsensoren A1, A2, A3. Seien $t_i$ (i = 1, 2, 3) die Zeitpunkte, zu denen in den Aufnehmern $A_i$ die Bursts registriert werden, und $v_i$ die Körperschallgeschwindigkeiten auf den Wegen vom Anschlagort zu den Aufnehmern bzw. Sensoren.

Dann ist:

$$\Delta t = t_i - t_j = D_i/v_i - D_j/v_j + L (l/v_i - l/v_j) \quad (1)$$

Diese allgemeine Formel läßt sich induktiv durch folgende Überlegung herleiten:

Wenn man den Laufzeitunterschied $\Delta t_{2,1} = (t_2 - t_0) - (t_1 - t_0)$ von zwei Körpereschallsignalen ermitteln will, von denen das eine vom Aufnehmer A2 zum Zeitpunkt $t_2$ und das andere vom Aufnehmer A1 zum Zeitpunkt $t_1$ registriert wird und von denen beide Signale zu ein und demselben Burst am Orte S gehören, so gilt

$$\Delta t_{2,1} = (t_2 - t_0) - (t_1 - t_0) =$$

$$= \frac{D_2 + L}{v_2} - \frac{D_1 + L}{v_1} = \frac{D_2}{v_2} - \frac{D_1}{v_2} + L \left(\frac{1}{v_2} - \frac{1}{v_1}\right).$$

worin $t_0$ den Referenz-Zeitpunkt - im allgemeinen den Zeitpunkt des Anschlags des losen Teils an der druckführenden Umschließung - bedeutet. Da in dieser Formel die Aufnehmer bzw. Körperschallsensoren A1 und A2 betrachtet werden, so sind entsprechende Indices "1" und "2" auch für die zugehörigen Längen, nämlich $D_1$ und $D_2$ und für die zugehörigen Geschwindigkeiten, nämlich $v_1$ und $v_2$, gewählt worden, wobei in diesem konkreten Fall $D_1$ $D_2$. Jeder dieser Indices "1" und "2" kann je einer Index-Grupe i oder j angehören, wobei i (1, 2, 3) und j (1, 2, 3). Damit wird der allgemeine Fall zum Ausdruck gebracht, daß $D_i$ und $D_j$ voneiannder verschieden oder einander gleich sein können, desgleichen $v_i$ und $v_j$ sowie $t_i$ und $t_j$.

Aufgrund der Theorie der Schallausbreitungsbedingungen (siehe z.B. B. J. Krautkrämer und H. Krautkrämer, Werkstoffprüfung mit Ultraschall, 4. Auflage, Springer Verlag, 1980) in Platten (= Wandungen von Rohren oder Kesseln) kommen verschiedene Schallausbreitungsarten mit verschiedenen Gruppengeschwindigkeiten vor, die darüber hinaus auch noch das Phänomen der Dispersion zeigen (siehe FIG 2). Daher ist bei der Ortung (das ist Auswertung obiger Formel) nicht klar, welche Werte für $v_i$ bzw. $v_j$ eingesetzt werden müssen, um aus den gemessenen Laufzeitdifferenzen $\Delta t$, die Schallwege $D_i$ und L zu ermitteln, auch wenn aus Testschlagdaten Referenzgeschwindigkeiten zur Verfügung stehen.

Weiter ergibt sich für den in der Praxis bisher oft unterstellten Fall, daß die $v_i$ ($i$ = 1, 2, 3...) = $v$ = $v_j$ ($j$ = 1, 2, 3) alle gleich groß sind;

$$\Delta t = D_i/v_i - D_j/v_j = (D_i - D_j)/v \quad (2)$$

und es ist grundsätzlich nur noch der Ort der Schalleinleitung (d.h. die Größe der $D_i$) bestimmbar.

Sind einzelne Reaktorkomponenten mit nur wenigen Aufnehmern instrumentiert oder empfängt gar nur einer der Aufnehmer ein ausreichend großes Signal, war in der Vergangenheit eine Ortungsaussage meist unmöglich oder es wurden teilweise Zusatzaufnehmer während des Anlagenbetriebes neu gesetzt.

Einschränkend sei angemerkt, daß ein "Kreisverfahren" bekannt ist (siehe z.B. B. J. Olma, Progress in Nuclear Energy, 1985, Vol. 15, Seiten 583 bis 594), mit dem eine gewisse Ortung auch mit einem oder zwei Aufnehmern möglich ist, wenn in Bursts mindestens zwei Komponenten separierbar sind, die unterschiedliche Geschwindigkeiten $v_1$ und $v_2$ aufweisen. Dann gilt für die Laufzeitdifferenzen der Burstkomponenten

$$\Delta t = (D + L) (v_2 - v_1)/v_1 \cdot v_2 \quad (3)$$

und bei Kenntnis von $v_1$ und $v_2$ ist D + L ermittelbar.

J. Olma et al haben mit Hilfe der Aufnehmerresonanz bzw. der Magnetadaptionsresonanz zwei Schallmodenkomponenten mit verschiedenen Geschwindigkeiten in einen Burst separiert und damit eine Ortung durchführen können. Jedoch löst diese Methode die grundsätzlichen Probleme der Ortung nur teilweise, weil:
- Die Dispersion nur unvollkommen berücksicht ist.
- Die Separation der Moden nur sehr unvollkommen ist:
Stillschweigend wird davon ausgegangen, daß z.B. im Frequenzband der Magnetadaptionsresonanz (bei ca. 5 - 10 kHz) nur der $a_0$-Mode vorkommt. Daß das nicht immer wahr ist, wird unten anhand von Testschlagdaten belegt.

2. Ausnutzung der Dispersion der Schallmoden zur Bestimmung der tatsächlichen Schallgeschwindigkeiten anhand des Bursts selbst

2.1 Separation der Schallmoden $s_0$ und $a_0$ aufgrund der Dispersion

Gemäß FIG 2 zeigen in dem für Kernkraftwerkskomponenten relevanten Parameterbereich für $d \cdot f \leq$ 2,5 mm MHz der $s_0$-Mode und der $a_0$-Mode völlig unterschiedliche Dispersion. Während die $s_0$-Mode-Geschwindigkeit bei kleinen $d \cdot f$ zunächst fast konstant verläuft und erst ab $d \cdot f \approx 1,5$ mm•MHz steil abfällt, zeigt die $a_0$-Mode-Geschwindigkeit eine große Dispersion besonders bei kleinen $d \cdot f$-Werten und verläuft ab $d \cdot f \approx 0,7$ mm•MHz fast konstant. Der $a_1$-Mode war bisher bei der Körperschallüberwachung in Kernkraftwerken nicht nachweisbar.

Durch Messung dieses unterschiedlichen Dispersionsverhaltens am Burst selbst (gerade auch bei Anomalien) sind die Komponenten des $s_0$-Modes und $a_0$-Modes zu identifizieren. Das kann auf folgende Weise geschehen:

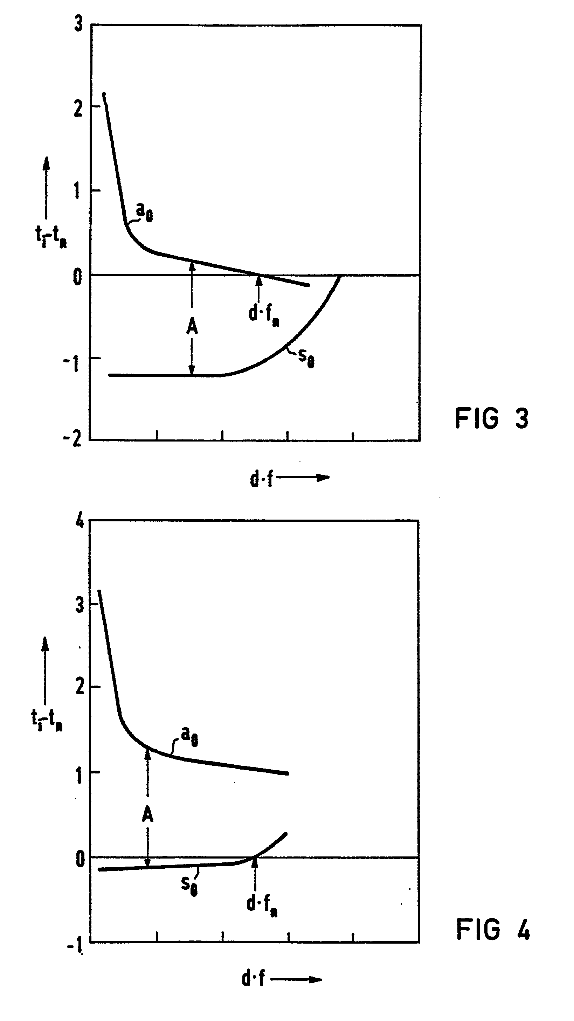

Transformiert man einen Burst in den Frequenzbereich, so ergeben sich i.a. Beiträge in fast dem gesamten Frequenzbereich, wobei allerdings bei einigen wenigen Frequenzen markante Peaks (Resonanzen) auftreten. Indem man nun Bandpaßfilter auf die markanten Peaks oder auch auf Teile des mehr kontinuierlichen Frequenzspektrums setzt und die entsprechenden Burstanteile im Zeitbereich darstellt und die Komponentenanfänge in üblicher Weise mißt, erhält man eine Reihe von Zeitpunkten $t_i(f_i)$ ($i$ = 1,...), denen eindeutig Frequenz $f_i$ zugeordnet sind. Nach Auswahl eines beliebigen Wertes $t_n(f_n)$ als Zeitreferenz, trägt man die Laufzeitdifferenzen $\Delta t_i = t_i(f_i) - t_n(f_n)$ als Funktion der Frequenzwerte $f_i$ auf. Man erhält ein Bild, das entweder FIG 3 oder FIG 4 entspricht, wobei sich FIG 3 für einen Referenzpunkt auf der $a_0$-Modekurve ergibt und FIG 4 für einen Referenzpunkt auf der $s_0$-Modekurve. Man kann nun anhand der Vorzeichen und des Verlaufs der Kurven eindeutig erkennen, welcher Mode den einzelnen Komponenten der Bursts bei den einzelnen Frequenzen zugeordnet werden muß. Damit ist theoretisch eine eindeutige Modenseparation möglich.

2.2 Modenseparation und Ortung in der Praxis

In der Praxis können etwas andere Ergebnisse auftreten:

I) Einer der Moden tritt überhaupt nicht auf, z.B. weil die entsprechenden Anteile (auf relativ langen Schallwegen) zu stark gedämpft sind. Dies trifft erfahrungsgemäß am ehesten für den $s_0$-Mode zu.

II) Bei bestimmten Frequenzen treten auch $\Delta$ t-Werte auf, die zwischen die beiden Kurven fallen, wenn in dem selektierten Frequenzband bei de ($s_0$- und $a_0$-) Moden zur Burstkomponente beitragen.

Liegt entsprechend I) nur der $a_0$-Mode vor, sind - vergl. (3) - aufgrund dessen Dispersion verschiedene Werte $\Delta t_k = (D + L) (v_k - v_n)/v_k . v_n$ bestimmbar und Schallfrequenzen zugeordnet. Da bekannt ist, an welcher Komponente (RDB = Reaktordruckbehälter, DE = Dampferzeuger, etc.) der Aufnehmer sitzt, sind die Plattendicke und damit gemäß der Theorie der Plattenwellen auch die zu den Frequenzen gehörenden Gruppengeschwindigkeiten $v_k$ und $v_n$, bekannt. Es ergibt sich ein Wert für D+L. Ist dies für die Signale mehrerer Aufnehmer für das gleiche Ereignis erfüllt, folgt für jeden der Aufnehmer ein Wert $D_i + L$. Bei Werten gleicher (willkürlich gewählter) Frequenz und damit Geschwindigkeit v der Burstkomponenten in verschiedenen Aufnehmern können die Laufzeitdifferenzen (jetzt zwischen analogen Burstkomponenten in verschiedenen Aufnehmern) $\Delta t_{1m}$ gebildet werden und es folgt:

$$\Delta t_{1m} = (D_1 + L)/v - (D_m + L)/v = (D_1 - D_m) v. \quad (4) \text{ ,vergl. (2)}$$

Dies kann zur Bestimmung des Schalleinleitungsortes benutzt werden.

Sind entsprechend II) beide Moden ($s_0$ und $a_0$) nachgewiesen und liegen zwei Kurven entsprechend FIG 3 vor oder sind wenigstens die Einhüllenden des Gebietes möglicher Laufzeitdifferenzen erkenntlich, so ist der Abstand A der Kurven oder Einhüllenden gegeben durch:

$$A = (D + L) (v_s - v_a) / v_s . v_a, (5), \text{ verlg. (3)}$$

wobei man für $v_s$ und $v_a$ wieder die gemäß Plattendicke, Mode und Frequenz gegebenen theoretischen Schallgeschwindigkeiten einsetzen kann, so daß ein Wert D + L folgt. Gibt es für verschiedene Aufnehmer bei gleichen Frequenzen und gleicher Plattendicke verschiedene Kurvenabstände $A_q$ und $A_p$, so ist

$$A_q - A_p = (D_q - D_p) (v_s - v_a) / v_s . v_a (6)$$

und daraus wieder die Ortung der Schalleinleitung möglich.

### 3. Anwendung der Auswertemethode auf Testschlagbursts

3.1 Testschlag auf heiße Loopleitung eines DWR = Druckwasserreaktors

In FIG 5 sind drei Beispiele von Burstsignalkomponenten nach Bandpaßfilterungen für einen Testschlag auf einer heißen Loopleitung eines DWR ( = Druckwasserreaktors) dargestellt.

In Spalte 3 der Tabelle 1 (siehe Seite - 13 -) sind ermittelte Laufzeitdifferenzen aufgeführt, wobei die Komponente bei 8,5 kHz als Bezug benutzt wurde. Das sind nur drei Werte. Trotzdem ist eine Analyse entsprechend Kapitel 2 grundsätzlich möglich.

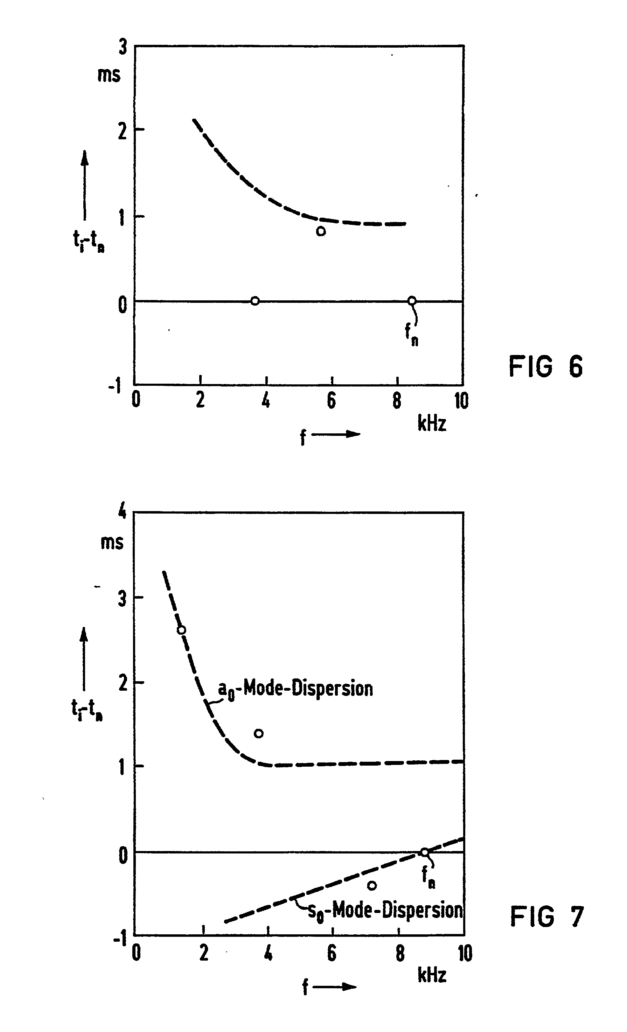

Die drei Laufzeitdifferenzen sind in Abb. 6 als Funktion der Mittenfrequenz der Bandpaßfilter aufgetragen. Ein Vergleich von FIG 6 mit FIG 3 und 4 zeigt, daß eindeutig eine Situation gemäß FIG 4 vorliegt, d.h., daß der Wert bei 5,75 kHz einem $a_0$-Mode zugeordnet werden muß, während die Werte bei 3,75 kHz bzw. 8,5 kHz klar $s_0$-Mode-Komponenten sind. In Spalte 4 der Tabelle 1 sind die dieser Zuordnung entsprechenden theoretischen Schallgeschwindigkeiten (unter Berücksichtigung der Wandstärke der Loopleitung von 50 mm) gemäß FIG 2 eingetragen. Nun läßt sich aus den Werten der Zeilen 2 und 3 eine Schallwegstrecke von 4,75 ± 0,6 m berechnen, wobei der angegebene Fehler allein auf der geschätzten Unsicherheit von 0,1 ms bei der Laufzeitdifferenzbestimmung beruht. Die ermittelte Schallwegstrecke ist in Übereinstimmung mit dem tatsächlichen Schallweg von 5,4 m.

3.2 Testschlag am Reaktorbehälter eines SWR (= Siedewasserreaktors)

Bereits 1982 wurden von KWU einige Testschlagdaten nach (analoger) Filterung untersucht. Für einen Schlag ergaben sich im Frequenzbereich drei relativ prominente Peaks bei 1,55 kHz, 3,8 kHz und 7,25 kHz, die mit der Analogtechnik gut separierbar waren, und einige Peaks um 8,9 kHz, die nicht völlig von dem Peak bei 7,25 kHz getrennt wurden.

In Tabelle 2 (siehe Seite - 13 -) sind in Spalte 3 die Laufzeitdifferenzen der Burstkomponenten aufgelistet, wobei die Kompo nente bei 8,9 kHz als Bezug benutzt ist. Diese Laufzeitdifferenzen sind in FIG 7 als Funktion der Frequenz aufgetragen. Durch Vergleich mit FIG 3 und 4 sind die beiden Burstkomponenten bei 1,55 kHz und 3,8 kHs $a_0$-Modeanteilen zuzuordnen, während die anderen beiden Werte auf den $s_0$-Mode deuten. Gemäß FIG 2 erwartet man daher die in Spalte 4 der Tabelle angegebenen Geschwindigkeiten.

Berechnet man mit den Werten der Tabelle den Schallweg $L_{S-A}$ vom Schlagort zum Aufnehmer, so ergeben sich drei Werte

SW(1,55 kHz) = 14,1 m
SW(3,80 kHz) = 13,9 m
SW(7,25 kHz) = 14,0 m.

Zunächst ist sehr befriedigend, daß die drei Schallweg- bzw. $L_{S-A}$-Werte sehr gut miteinander übereinstimmen. Der wirkliche Schallweg von etwa 13,2 m wird auf etwa 6 % genau ermittelt. Berechnet man noch nachträglich mit dem nun bekannten Schallweg die theoretischen Laufzeitdifferenzen als Funktion der Burstkomponentenfrequenzen, so ergeben sich die gestrichelten Kurven in FIG 7, die die obige Modenzuordnung nochmals bestätigen.

### 4. Ergebnisse, Konsequenzen und Vorteile

Nachdem theoretisch und anhand von Testschlagdaten bewiesen ist, daß bei der Ortung von Schlagereignissen einerseits die Dispersion der Schallmoden einen erheblichen Einfluß auf die Genauigkeit hat und andererseits ausgenutzt werden kann, um die wirklichen Schallgeschwindigkeiten aus den Bursts selbst zu entnehmen, ergeben sich die Folgerungen bzw. Vorteile:

1) Analysen von Bursts sollten immer auch im Frequenzbereich bzw. nach Bandpaßfilterungen durchgeführt werden. Die dadurch mögliche neue Analysemethode mit gleichzeitiger Bestimmung der Schallgeschwindigkeiten aus den Signalen selbst gestattet zuverlässige Ortungen, dadurch entscheidende Verbesserungen bei der Beurteilung der Ursache von Anomalien, bei Bedarf schnellere Verhinderung sich anbahnender Schäden (Anlagenverfügbarkeit) und Reduktion der Strahlenbelastungen bei Reparaturen.

2) Die neue Analysemethode gestattet bei wenigen Aufnehmern ausreichende Ortungen, nicht nur des Schalleinleitungsortes sondern sogar des Schlagortes.

3) Es ist überflüssig aus Testschlägen Referenzgeschwindigkeiten abzuleiten.

4) Man kann z.B. bei Revisionen mit weniger Schlagorten als bisher (d.h. weniger Strahlenbelastung) zur Funktionsprüfung der Aufnehmer auskommen.

5) Im Rahmen der Erfindung sind computerunterstützte automatische Analysen der vorgeschlagenen Art durchführbar und sinnvoll. Das könnte vorteilhaft so geschehen, daß etwa 10 Bandpaßwerte im Frequenzbereich der Überwachung vorgegeben werden, die entsprechenden Burstkomponenten automatisch im Zeitbereich separiert werden und mit Hilfe von Korrelationsmethoden die Zeitdifferenzen ermittelt werden. Gibt man weiter die wenigen Parameter der Wandstärken etc. ein, könnte der Computer im Prinzip auch die Schallgeschwindigkeiten, selbst bei anomalen Ereignissen, direkt ermitteln.

### 5. Tabelle 1 und Tabelle 2

Hierzu wird auf die Folgeseite verwiesen.

Tabelle 1:     Zusammenstellung der Daten von 3
               Burstkomponenten für einen Testschlag auf
               die heiße Loopleitung eines DWR

| Mittenfrequenz des Bandpasses kHz | Parameter d . f mm MHz | Laufzeit- differenz t ms | Theoretische Geschwindig- keiten und Schallmode m/ms |
|---|---|---|---|
| 3,75 | 0,19 | 0,0 | $s_0$: 5,4 |
| 5,75 | 0,29 | 0,8 | $a_0$: 2,8 |
| 8,50 | 0,43 | 0,0 (Referenz) | $s_0$: 5,3 |

Tabelle 2:     Zusammenstellung der Daten von
               Burstkomponenten für einen Testschlag an
               einem SWR-RDB (RDB = Reaktordruckbehälter)

| Mittenfrequenz des Bandpasses kHz | Parameter d . f mm MHz | Laufzeit- differenzen t ms | Theoretische Geschwindig- keiten und Schallmoden m/ms |
|---|---|---|---|
| 1,55 | 0,26 | 2,6 | $a_0$: 2,4 |
| 3,80 | 0,65 | 1,4 | $a_0$: 3,0 |
| 7,25 | 1,24 | -0,4 | $s_0$: 4,9 |
| 8,90 | 1,52 | 0,0 (Referenz) | $s_0$: 4,3 |

**Patentansprüche**

1. Verfahren zur Ortung von Anschlägen d.h. "Bursts" mit einem Körperschall-Überwachungssystem bei druckführenden Umschließungen in Kraftwerken, wie Komponenten und Rohrleitungen, wobei
- durch einen oder mehrere Körperschall-Sensoren, die auf der zu überwachenden Umschließung an unterschiedlichen Stellen angebracht sind, die vom Burstort ausgehenden Burstsignale aufgenommen und durch nachgeschaltete Aufzeichnungsgeräte aufgezeichnet werden;
- zwei Burstsignalanteile ($BS_1$, $BS_2$) bei Frequenzen ($f_1$, $f_2$), wobei unter Frequenzen auch Frequenzbandbreiten ($\Delta f_1, \Delta f_2$) verstanden werden, aus dem Burstsignal-Spektrum ausgeblendet und in Beziehung gesetzt werden mit dem Laufzeitunterschied ($\Delta t_{1,2}$), welcher sich durch die unterschiedlichen Ankunftszeiten ($t_1$, $t_2$) der zwei Burstsignalanteile am jeweiligen Körperschall-Sensor ergeben, so daß nach der allgemeinen Formel

$$L_{S-E} = \frac{\Delta t_{1,2} \cdot v_1 \cdot v_2}{v_1 - v_2}$$

der Schallweg ($L_{S-E}$) vom Körperschall-Sensor bis zum Burstort bestimmbar ist, wobei ($v_1$, $v_2$) die vermuteten Fortpflanzungsgeschwindigkeiten bei gegebener Frequenz bedeuten,

**dadurch gekennzeichnet,**

- daß mit Hilfe elektronischer Signalfiltersysteme wenigstens drei Burstsignalkomponenten ($BS_i...BS_n$) bei Frequenzen ($f_i...f_n$) separiert werden,
- daß die Signalanfänge ($t_i...t_n$) der Burstsignalkomponenten ($BS_i...BS_n$) bestimmt werden ($i = 1, 2, 3 ... n$),
- daß bezüglich eines willkürlich aus der Menge der Signalanfänge ($t_i...t_n$) ausgewählten Referenzzeitpunktes ($t_r$) Laufzeitdifferenzen ($t_1 - t_r$) .... (($t_n - t_r$) gebildet werden,
- daß aus den so gebildeten Laufzeitdifferenzen als Funktion der - wegen der Filterung bekannten - Frequenzen ($f_i...f_n$) das Dispersionsverhalten der separierten Burstsignalkomponenten ($BS_i...BS_n$) bestimmt wird,
- daß unter Berücksichtigung der Wandstärke der signalführenden Umschließung und durch vergleichende Analyse mit dem theoretischen Dispersionsverhalten, welches zum Beispiel in an sich bekannten Modendiagrammen für die einzelnen Wellenmoden ($s_0$, $a_0$, $a_1$...) von Plattenwellen in Form von abhängig von Frequenz oder von dem Produkt Plattendicke × Frequenz aufgetragenen Ausbreitungsgeschwindigkeiten dokumentiert ist, nicht nur die Schallausbreitungsart ($s_0$-Mode, $a_0$-Mode) der einzelnen Burstsignalkomponenten festgestellt wird, sondern darüber hinaus die zu den einzelnen Burstsignalkomponenten ($BS_i...BS_n$) gehörigen Gruppengeschwindigkeiten ($v_i...v_n$) ermittelt werden,
- und daß anschließend aufgrund der oben angegebenen allgemeinen Gleichung mit wenigstens zwei in die Gleichung einzusetzenden Parameter-Sets der Schallweg ($L_{S-E}$) wenigstens zweifach redundant bestimmt wird.

2. Verfahren nach Anspruch 1, **dadurch gekennzeichnet,**

a) daß bei wenigstens zwei empfangenen Burstsignalkomponenten ($BS_1$, $BS_2$) mit voneinander verschiedenen Frequenzen ($f_1$, $f_2$) eines einzigen Wellenmodes ($a_0$ bzw. $s_0$) aus der anhand wenigstens eines Körperschall-Sensors gemessenen Laufzeitdifferenz

$$(t_1 - t_2) = (D + L) \frac{v_1 - v_2}{v_1 \cdot v_2}$$

und den wegen der Dispersion verschiedenen und bekannten Geschwindigkeiten ($v_1$ und $v_2$) die Größe $L_{S-E} = D + L$ ermittelt wird, wobei (D) den Schallweg in der Komponente und (L) den Schallweg in einer mit der Komponente einseitig verbundenen Schall-Leitungsstrecke bedeuten;

b) daß bei wenigstens einem Körperschall-Sensor und bei festen Frequenzen (f), aber für zwei verschiedene Wellenmoden ($a_0$) bzw. ($s_0$) und dementsprechend bei unterschiedlichen Ausbereitungsgeschwindigkeiten ($v_s$  $v_a$) aus einem Laufzeit/Frequenz-Diagramm Abstände (A) der Laufzeitdifferenzen der Kurven oder Einhüllenden der Meßwerte hergeleitet werden und sodann der räumliche Abstand $L_{S-E} = D + L$ gemäß der Beziehung

$$A = (D + L) \cdot \frac{v_s - v_a}{v_s + v_a}$$

ermittelt wird und

c) daß bei festen Frequenzen (f), aber bei wenigstens drei Körperschall-Sensoren, welche jeweils Burstkomponenten-Zeitdifferenzen für den $a_0$- und den $s_0$-Mode liefern, wobei der Abstand ($A_p$) zwischen der $a_0$- und der $s_0$-Kurve in dem dem einen Sensor zugeordneten Diagramm unterschiedlich ist von dem Abstand ($A_q$) zwischen der $a_0$- und der $s_0$-Kurve in dem dem anderen Sensor zugeordneten Diagramm und wobei die Plattendicke bzw. Wandstärke gleich ist, der Ort der Schalleinleitung ermittelt wird gemäß der Beziehung

$$A_q - A_p = (D_q - D_p) \cdot \frac{v_s - v_a}{v_s \cdot v_a}$$

und unter Zuhilfenahme des Hyperbelschnittverfahrens.

## Claims

1. Process for the location of shocks, i.e. "bursts" using a solid-state-sound monitoring system in pressurised enclosures in power plants, such as components and pipelines, wherein
   – burst signals originating from the burst site are picked up by one or more solid-state-sound sensors fitted at different points on the enclosure to be monitored, and are recorded by recording devices connected on the output side;
   – two burst signal components ($BS_1$, $BS_2$) at frequencies ($f_1$, $f_2$), including also frequency bandwidths ($\Delta f_1$, $\Delta f_2$), are filtered out of the burst signal spectrum and are related to the travel time difference ($\Delta t_{1,2}$) which results from the different arrival times ($t_1$, $t_2$) of the two burst signal components at the respective solid-state-sound sensor so that in accordance with the general formula

$$L_{S-E} = \frac{\Delta t_{1,2} \cdot v_1 \cdot v_2}{v_1 - v_2}$$

the sound path ($L_{S-E}$) from the solid-state-sound sensor up to the burst site can be determined, ($v_1$, $v_2$) representing the assumed propagation velocities at a given frequency, characterised in that
   – with the aid of electronic signal filter systems at least three burst signal components ($BS_i...BS_n$) are separated at frequencies ($f_i....f_n$),
   – in that the signal onsets ($t_i....t_n$) of the burst signal components ($BS_i....BS_n$) are determined ($i$ = 1, 2, 3....n),
   – in that travel time differences ($t_i - t_r$)....(($t_n - t_r$) are formed with respect to a reference time ($t_r$) selected arbitrarily from the group of signal onsets ($t_i....t_n$),
   – in that the dispersion behaviour of the separated burst signal components ($BS_i...BS_n$) is determined from the travel time differences thus formed as a function of the frequencies ($f_i...f_n$) know because of the filtering,
   – in that, taking into account the wall thickness of the enclosure carrying the signal and by comparative analysis with the theoretical dispersion behaviour, which for example is documented in a known mode diagram for the individual wave modes ($s_O$, $a_O$, $a_1...$) of plate waves in the form of propagation velocities plotted as a function of frequency or of the product of plate thickness and frequency, not only is the sound propagation type ($s_O$ mode, $a_O$ mode) of the individual burst signal components determined but also the group velocities ($v_i...v_n$) associated with the individual burst signal components ($BS_i....BS_n$) are determined,
   – and in that finally because of the above given general equation with at least two parameter sets to be inserted into the equation the sound path ($L_{S-E}$) is determined with at least double redundancy.

2. Process according to claim 1, characterised in that,
   a) for at least two received burst signal components ($BS_1$, $BS_2$) having dissimilar frequencies ($f_1$, $f_2$) of a single wave mode ($a_O$ or $s_O$) the variable $L_{S-E} + D + L$ is determined from the travel time difference

$$(t_1 - t_2) = (D + L) \frac{v_1 - v_2}{v_1 \cdot v_2}$$

measured by means of at least one solid-state-sound sensor, and from the velocities ($v_1$ and $v_2$), which are known and are dissimilar because of the dispersion, wherein (D) is the sound path in the component and (L) is the sound path in a sound conduction route joined at one side to the component;
   b) in that for at least one solid-state-sound sensor and at fixed frequencies ($f$), but for two different

wave modes ($a_O$) or ($s_O$) and accordingly with different propagation velocities ($v_s \neq v_a$), intervals (A) of the travel time differences of the curves or envelopes of the measured values are derived from a travel time/frequency diagram and then the spatial distance $L_{S-E} = D + L$ is determined in accordance with the relationship

$$A = (D + L) \; \frac{v_s - v_a}{v_s + v_a}$$

and

c) at fixed frequencies (f), but for at least three solid-state-sound sensors which each provide burst component time differences for the $a_O$ and $s_O$ mode, the interval ($A_p$) between the $a_O$ and the $s_O$ curve in the diagram associated with the one sensor being different from the interval ($A_q$) between the $a_O$ and the $s_O$ curve in the diagram associated with the other sensor and the plate thickness or wall thickness being the same, the site of the sound origin is determined in accordance with the relationship

$$A_q - A_p = (D_q - D_p) \cdot \frac{v_s - v_a}{v_s \cdot v_a}$$

and with the aid of the hyperbolic section method.

## Revendications

1. Procédé pour localiser des chocs, c'est-à-dire des "bursts" (salves), à l'aide d'un système de contrôle du son à propagation dans un solide, dans des gainages ou enceintes sous pression de centrales électriques, comme par exemple des composants et des conduites tubulaires, et selon lequel

— un ou plusieurs capteurs du son se propageant dans un solide, qui sont disposés en différents emplacements des gainages ou enceintes devant être contrôlés, enregistrent les signaux de salve, qui sont enregistrés par des appareils d'enregistrement montés en aval;

— deux composantes ($BS_1$, $BS_2$) d'un signal de salve pour des fréquences ($f_1$, $f_2$), le terme fréquences devant être compris comme désignant également des largeurs de bandes de fréquence ($\Delta f_1$, $\Delta f_2$), sont extraites du spectre du signal de salve et sont soumises en rapport avec la différence de temps de propagation ($\Delta t_{1,2}$) que l'on obtient en raison des instants différents d'arrivée ($t_1$, $t_2$) des deux composantes du signal de salve au niveau du capteur respectif du son se propageant dans un solide, de sorte que, conformément à la formule générale

$$L_{S-E} = \frac{\Delta t_{1,2} \cdot v_1 \cdot v_2}{v_1 - v_2}$$

le trajet ($L_{S-E}$) du son depuis le capteur de son se propageant dans le solide ou dans la structure jusqu'à l'emplacement d'origine de la salve peut être déterminé, ($v_1$, $v_2$) désignant les vitesses supposées de propagation pour une fréquence donnée, caractérisé par le fait

— qu'au moins trois composantes ($BS_i...BS_n$) du signal de salve ayant des fréquences ($f_i...f_n$) sont séparées à l'aide de systèmes électroniques de filtrage des signaux,

— que les débuts ($t_i...t_n$) des composantes ($BS_i...BS_n$) du signal de salve sont déterminés ($i$= 1, 2, 3...n),

— que des différences de temps de propagation ($t_1 - t_r$) ... ($t_n - t_r$) sont formés par rapport à un instant de référence ($t_r$) sélectionné à volonté parmi l'ensemble des débuts ($t_i...t_n$) de signaux,

— qu'à partir des différences de temps de propagation ainsi formées, le comportement de dispersion des composantes séparées ($BS_i...BS_n$) du signal de salve est déterminé en fonction des fréquences ($f_i...f_n$) -connues sur la base du filtrage-,

— que non seulement le type de propagation du son (mode $s_O$, mode $a_O$) des différentes composantes du signal de salve est déterminé, mais qu'en outre les vitesses de groupe ($v_i...v_n$) associées aux différentes composantes ($BS_i...BS_n$) du signal de salve sont déterminées, en tenant compte de l'épaisseur de paroi du gainage véhiculant le signal et au moyen d'une analyse comparative par rapport au comportement théorique de dispersion, qui est enregistré par exemple dans des diagrammes de modes connus en soi, pour les différents modes de propagation ($s_O$, $a_O$, $a_1$...) d'ondes de Lamb sous la forme de vitesses de propagation enregistrées en fonction de la fréquence ou du produit épaisseur de plaque x fréquence, et

– qu'ensuite le trajet ($L_{S-E}$) du son est déterminé d'une manière redondante au moins deux fois sur la base de la relation générale indiquée plus haut, avec au moins deux ensembles de paramètres introduits dans la relation.

2. Procédé suivant la revendication 1, caractérisé par le fait que

a) que dans le cas d'au moins deux composantes reçues ($BS_1$, $BS_2$) du signal de salve, possédant des fréquences différentes ($f_1$, $f_2$) d'un seul mode d'onde ($a_O$ ou $s_O$), la valeur $L_{S-E} = D + L$ est déterminée à partir de la différence de temps de propagation, mesurée sur la base d'au moins un capteur du son propagé dans le solide

$$(t_1 - t_2) = (D + L) \frac{v_1 - v_2}{v_1 \cdot v_2}$$

et sur la base des vitesses connues ($v_1$ et $v_2$), différentes en raison de la dispersion, (D) représentant le trajet du son pour le composant et (L) le trajet du son dans une section de guidage du son reliée unilatéralement au composant;

b) que dans le cas d'au moins un capteur du son à propagation dans le solide et pour des fréquences fixes (f), et pour deux modes d'ondes différents ($a_O$) et ($s_O$) et par conséquent pour des vitesses de propagation différentes ($v_s \neq v_a$), les distances (A) des différences des temps de propagation des courbes ou des enveloppes des valeurs de mesure sont obtenues à partir d'un diagramme temps de propagation/fréquence et qu'alors la distance spatiale $L_{S-E} = D + L$ est déterminée conformément à la relation

$$A = (D + L) \cdot \frac{v_s - v_a}{v_s + v_a}$$

c) que dans le cas de fréquences (f) fixes, mais d'au moins trois capteurs du son transmis par la structure, qui délivrent respectivement des différences de temps des composantes du signal de salve pour les modes $a_O$ et $s_O$, is distance ($A_p$) entre la courbe $a_O$ et la courbe $s_O$ dans le diagramme associé à un capteur étant différente de la distance ($A_q$) entre la courbe $a_O$ et la courbe $s_O$ dans le diagramme associé à l'autre capteur et l'épaisseur de la plaque ou l'épaisseur de paroi étant la même, le lieu d'origine du son est déterminé conformément à la relation

$$A_q - A_p = (D_q - D_p) \cdot \frac{v_s - v_a}{v_s \cdot v_a}$$

et à l'aide du procédé du découpage hyperbolique.

FIG 1

FIG 2

FIG 3

FIG 4

FIG 5A

FIG 5B

FIG 5C

EP 0 279 184 B1

EP 0 279 184 B1

FIG 6

$t_i - t_n$

$f_n$

FIG 7

$a_0$-Mode-Dispersion

$s_0$-Mode-Dispersion

$f_n$

$t_i - t_n$